# EUROPÄISCHE PATENTSCHRIFT

(11) **EP 0 494 151 B1**
(45) Veröffentlichungstag und Bekanntmachung des Hinweises auf die Patenterteilung: **20.07.1994**
(21) Anmeldenummer: 90911998.4
(22) Anmeldetag: 14.08.1990
(51) Int. Cl.: H01H 31/00

(54) **ERDUNGSSCHALTER FÜR EINE DRUCKGASISOLIERTE, METALLGEKAPSELTE HOCHSPANNUNGSSCHALTANLAGE**
EARTHING SWITCH FOR A METAL-ENCAPSULATED HIGH-VOLTAGE SWITCHBOARD PLANT INSULATED BY PRESSURISED GAS
INTERRUPTEUR DE MISE A LA TERRE POUR INSTALLATION ELECTRIQUE A HAUTE TENSION ISOLEE A GAZ COMPRIME ET A BLINDAGE METALLIQUE

(30) Priorität: 27.09.1989 DE 3932775; 18.06.1990 DE 4019686
(43) Veröffentlichungstag der Anmeldung: 15.07.1992
(73) Patentinhaber: SIEMENS AKTIENGESELLSCHAFT, 80333 München (DE)
(72) Erfinder: LORENZ, Dieter, D-1000 Berlin 45 (DE); PIRCHER, Christian, D-1000 Berlin 61 (DE); GEIER, Petra, D-1000 Berlin 31 (DE); HOLLER, Helmut, D-1000 Berlin 31 (DE); PFAFF, Dietrich, D-1000 Berlin 41 (DE)
(86) Internationale Anmeldenummer: DE9000632
(87) Internationale Veröffentlichungsnummer: WO9105356

(56) Entgegenhaltungen:
- EP-A- 0 075 922
- DE-B- 2 907 559
- US-A- 2 708 699

## Beschreibung

Die Erfindung bezieht sich auf einen Erdungsschalter für eine druckgasisolierte, metallgekapselte Hochspannungsschaltanlage, deren Kapselung ebenso wie das Gehäuse des Erdungsschalters auf Erdpotential liegt, bei dem das im Gehäuse des Erdungsschalters gasförmig oder durch Isolierstoff isolierte bewegliche Schaltstück von einer rotierenden Antriebswelle bewegt wird, die das Gehäuse durchsetzt, und bei dem Kontaktelemente vorgesehen sind, welche das Erdpotential auf das bewegliche Schaltstück übertragen, wobei die Verbindung zum Erdpotential, insbesondere lösbar ausgebildet ist.

Ein derartiger Erdungsschalter ist aus der EP-A-0 075 922 bekannt. Dieser bekannte Erdungsschalter dient nicht nur zur Übertragung des Erdpotentials, sondern ist isoliert ausgebildet, um auch zu Meßzwecken verwendet zu werden. Dazu wird dann die lösbar gestaltete Verbindung zum Erdpotential aufgehoben. Bei dem bekannten Erdungsschalter ist zwischen der Kapselung der Hochspannungsschaltanlage und dem Gehäuse des Erdungsschalters ein Ring aus Isolierstoff angeordnet, der die beiden, normalerweise Erdpotential führenden Teile galvanisch voneinander trennt. Auch die Mittel zur Übertragung des Erdpotentials auf das bewegliche Schaltstück, die am Schaltstück anliegende Gleitkontakte aufweisen, sind gegenüber dem Gehäuse des Erdungsschalters isoliert, wodurch das Schaltstück auch zur Führung von Meßströmen geeignet ist.

Der Erfindung liegt die Aufgabe zugrunde, bei einem derartigen Erdungsschalter die Mittel zur Übertragung des Erdpotentials auf das bewegliche Schaltstück besonders einfach zu gestalten.

Diese Aufgabe wird erfindungsgemäß dadurch gelöst, daß bei einem Erdungsschalter der eingangs beschriebenen Art gemäß der Erfindung die aus elektrisch leitendem Material bestehende Antriebswelle isoliert in das Gehäuse eingeführt und außerhalb des Gehäuses mit Mitteln zur Übertragung des Erdpotentials verbunden ist und daß das bewegliche Schaltstück ein mit der Antriebswelle fest verbundenes Schaltmesser ist, dessen erstes Ende biegesteif ausgebildet und winkelsteif an die Antriebswelle gekoppelt ist, und dessen zweites Ende elastisch ausgebildet ist.

Die rotierende Antriebswelle erfüllt somit eine Doppelfunktion: Sie dient neben der Kraft- und Bewegungsübertragung auf das bewegliche Schaltstück auch zur Einführung des Erdpotentials. Dies wird durch ihre Isolierung gegenüber dem Gehäuse ermöglicht, wozu eine dem Durchmesser der Antriebswelle entsprechende Buchse aus Isolierstoff ausreichend ist. Die zur Kraftübertragung von der Antriebswelle auf das bewegliche Schaltstück sowieso vorhandenen mechanischen Verbindungen leiten dann auch das Potential weiter bzw. führen Ströme. Das Gehäuse des Erdungsschalters braucht nicht galvanisch von der Kapselung der Hochspannungsschaltanlage getrennt zu sein.

Das bewegliche Schaltstuck ist als Schaltmesser ausgeführt, das mit der Antriebswelle fest verbunden ist. Beim Auftreten von hohen Kurzschlußströmen wird die Ankopplung des Schaltmessers an die Antriebswelle großen Stromkräften ausgesetzt. Um eine Verformung oder ein Abbiegen des Schaltmessers zu verhindern, ist das erste Ende des Schaltmessers biegesteif ausgebildet und winkelsteif an der Antriebswelle befestigt. Das freie Ende des Schaltmessers ist elastisch ausgebildet, um eine seitliche elastische Auslenkung zu ermöglichen. Dadurch können Toleranzen bei der relativen Positionierung des Gegenkontaktes zum Schaltmesser ohne eine Nachjustierung ausgeglichen werden.

Der Messerkontakt wird, falls bei seinem Eintritt in den Gegenkontakt die Positionierung nicht genügend genau ist, elastisch verformt. Der Messerhalter ist gegenüber an sich bekannten Messerhaltern verkürzt, um einen elastischen Bereich des Messerkontaktes freizulassen.

Eine elastische Auslenkbarkeit des Messerkontaktes kann gemäß der Erfindung auch dadurch erreicht werden, daß das Schaltmesser aus einem steifen, an der Antriebswelle befestigten Messerhalter und einem Messerkontakt besteht, und daß der Messerhalter an seinem dem Kontaktmesser zugewandten Ende wenigstens einen Bereich reduzierten Querschnittes aufweist.

Beispielsweise kann der Messerhalter sich, von seinem an der Antriebswelle befestigten Ende beginnend, zum Messerkontakt hin verjüngen, um eine elastische Auslenkung des Messerhalters zu ermöglichen. Es ist auch denkbar, daß der Messerhalter an einer oder mehreren Stellen Ausnehmungen, wie z. B. Einkerbungen oder Ausfräsungen aufweist, die ihn elastisch verformbar machen.

Da die Übertragung des Erdpotentials auf die Antriebswelle durch außerhalb des Gehäuses bzw. der Kapselung befindliche Mittel vorgenommen wird, kann die Antriebswelle dort ohne Platz- oder Montageprobleme, z. B. durch ein Kontaktstück oder ein Stromband, mit dem Erdpotential verbunden werden. Diese Verbindung ist außerdem leicht zugänglich und überwachbar und kann, sofern dies notwendig ist, auch wieder unterbrochen werden.

Für die Isolierung der Antriebswelle gegenüber dem Gehäuse bzw. die des beweglichen Schaltstiftes gegenüber dem Gehäuse wird mit Vorteil eine Isolierbuchse aus Polytetrafluorethylen verwendet, da dieses Isoliermaterial nicht nur gute Gleiteigenschaften aufweist, sondern auch eine hohe Spannungsfestigkeit hat. Um die Herstellung der Isolierbuchse zu vereinfachen könnte diese auch aus einem ausgehärtetem Duroplast, wie Epoxidharz, insbesondere Gießharz, bestehen, da ein derartiger Duroplast bei Erwärmung stabile mechanische Eigenschaften aufweist.

Im folgenden sei die Erfindung noch anhand der in den Figuren 1 bis 6 der Zeichnung schematisch dargestellten Ausführungsbeispiele näher erläutert.
Die Figuren 1 bis 4 zeigen Schnitte durch einen Teil eines Druckbehälters einer metallgekapselten, druckgasisolierten Hochspannungsschaltanlage und verschieden gestalteten, jeweils mit diesem verbundenen Erdungsschaltern.
In den Figuren 5 und 6 ist jeweils eine äußere Ansicht auf das Gehäuse des Erdungsschalters dargestellt.

Bei den in den Figuren dargestellten Ausführungsbeispielen liegt in einem die Kapselung 1 einer mit SF₆ druckgasisolierten, metallgekapselten Hochspannungsschaltanlage bildenden Druckbehälter eine nur angedeutete Unterbrechereinheit 2 eines Hochspannungs-Leistungsschalters, die mit einem abgeschirmten elektrischen Leiter 3 verbunden ist. Über diesen, normalerweise Hochspannung führenden elektrischen Leiter 3 ist die Unterbrechereinheit 2 mit den anderen, nicht dargestellten Teilen und Geräten der Hochspannungsschaltanlage verbunden.

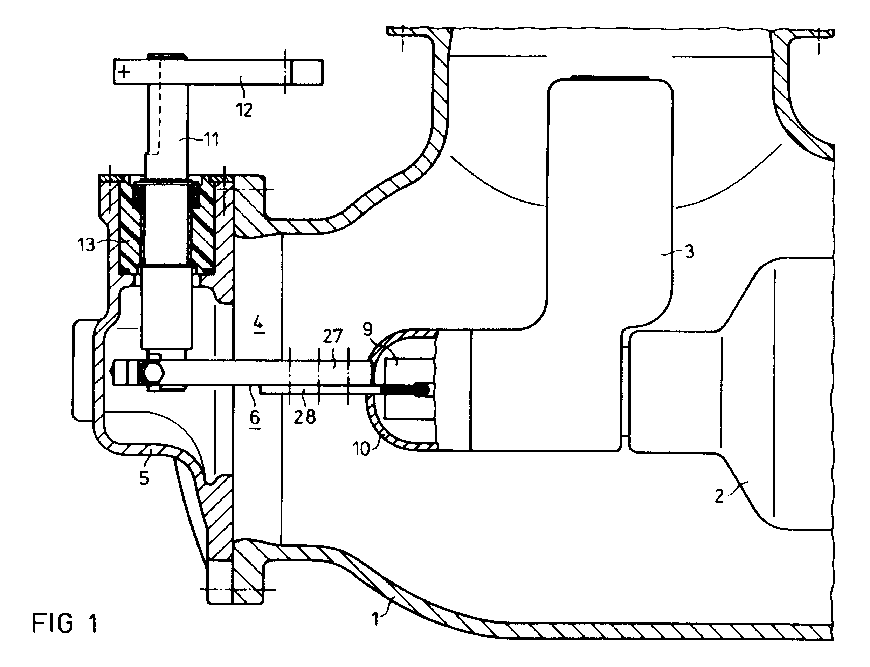

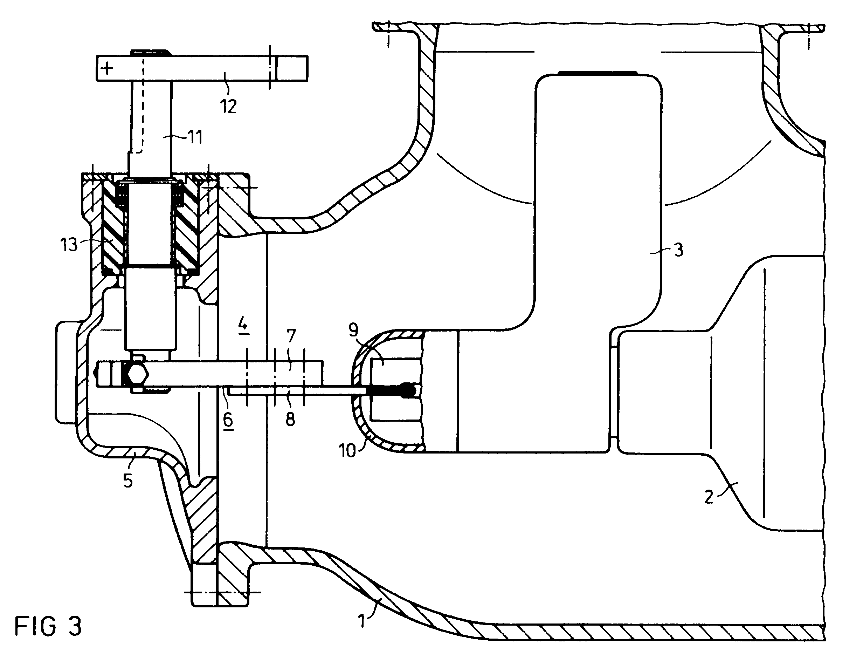

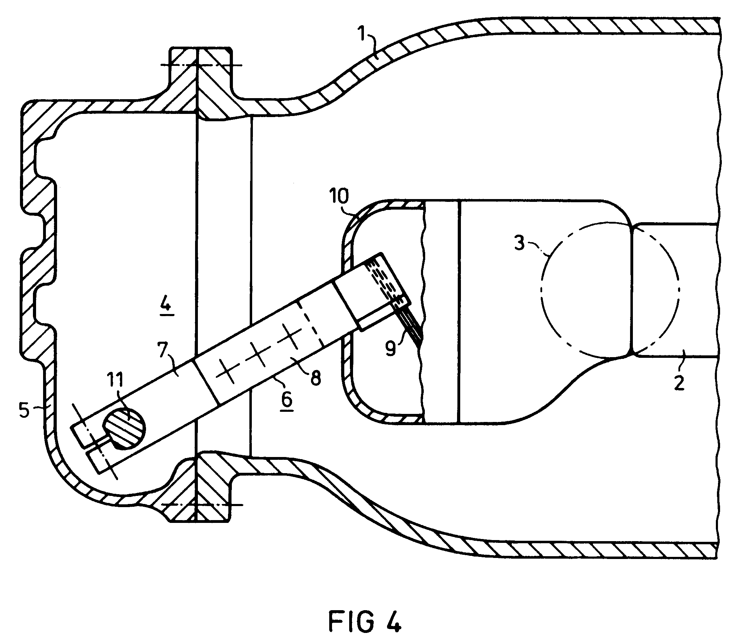

Weiterhin ist ein Erdungsschalter 4 vorgesehen, dessen Gehäuse 5 an dem Druckbehälter 1 angeflanscht ist. Dieser Erdungsschalter 4 ist als Messer-Erdungsschalter ausgebildet. Das bewegliche Schaltstück 6 des Erdungsschalters 4 besteht aus einem Messerhalter 7, 27, 37 an dem der Messerkontakt 8, 28, 38 befestigt ist, der in der Einschaltstellung an einem Gegenkontakt 9 Zur Anlage gelangt. In der Figur 1 ist ein Messerhalter 27 dargestellt, der nur einen kleinen Bereich des Messerkontaktes 28 freiläßt. Demgegenüber ist der Messerhalter 7 bei dem in den Figuren 3 und 4 dargestellten Ausführungsbeispiel wesentlich kürzer ausgebildet, so daß dort ein größerer Bereich des Messerkontaktes 8 freibleibt. Dadurch ist der Messerkontakt 8 bei dem in den Figuren 3 und 4 dargestellten Erdungsschalter seitlich elastisch auslenkbar, um Positionierungstoleranzen zwischen dem Messerkontakt 8 und dem Gegenkontakt 9 ausgleichen zu können. Der Messerhalter 7 ist biegesteif ausgeführt und winkelsteif an die Antriebswelle 11 angekoppelt, um beim Auftreten von Kurzschlußströmen eine Verformung des Messerhalters 7 durch die Stromkräfte zu verhindern.

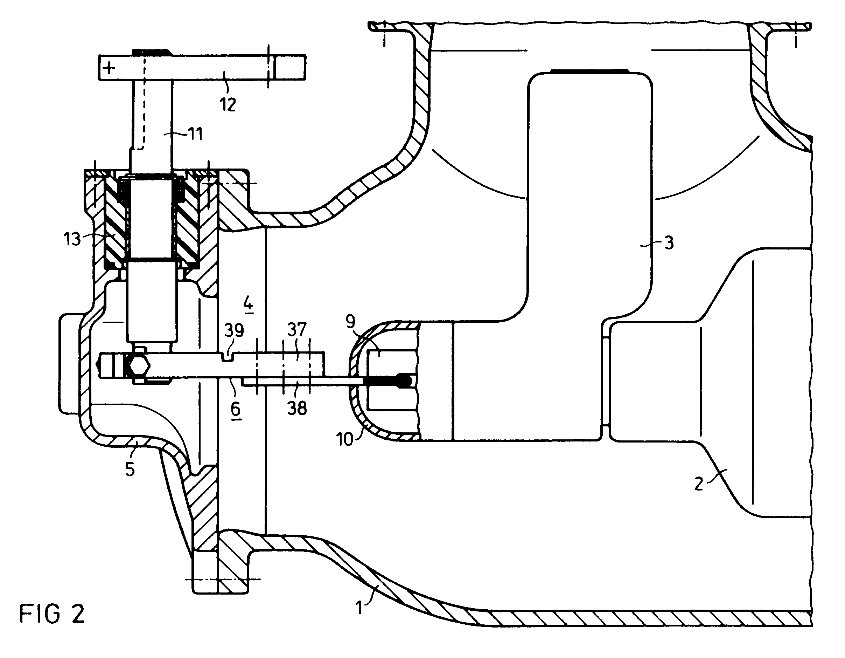

Bei dem in Figur 2 dargestellten Ausführungsbeispiel weist der Messerhalter 37 seitlich eine Ausnehmung 39 auf, die beispielsweise ausgefräst sein kann. Durch diese Ausfräsung wird der Messerhalter 37 leichter elastisch verformbar und der Messerkontakt 38 kann elastisch ausgelenkt werden.

Der Gegenkontakt 9 ist galvanisch mit dem elektrischen Leiter 3 verbunden und liegt innerhalb von dessen Abschirmung 10. Auf diese Weise kann der elektrische Leiter 3 mit Erdpotential verbunden werden. In den Figuren 1 bis 4 ist jeweils die Einschaltstellung des Erdungsschalters 4 dargestellt.

Die Bewegung des beweglichen Schaltstücks 6 des Erdungsschalters 4 wird durch die rotierende Antriebswelle 11 ausgelöst. Zur Auslösung der Schaltbewegung dient ein außerhalb des Gehäuses 5 liegender, nicht dargestellter Antrieb, der über einen Antriebshebel 12 mit der Antriebswelle 11 verbunden ist und somit die Einschalt- bzw. Ausschaltbewegung des beweglichen Schaltstücks 6 steuert.

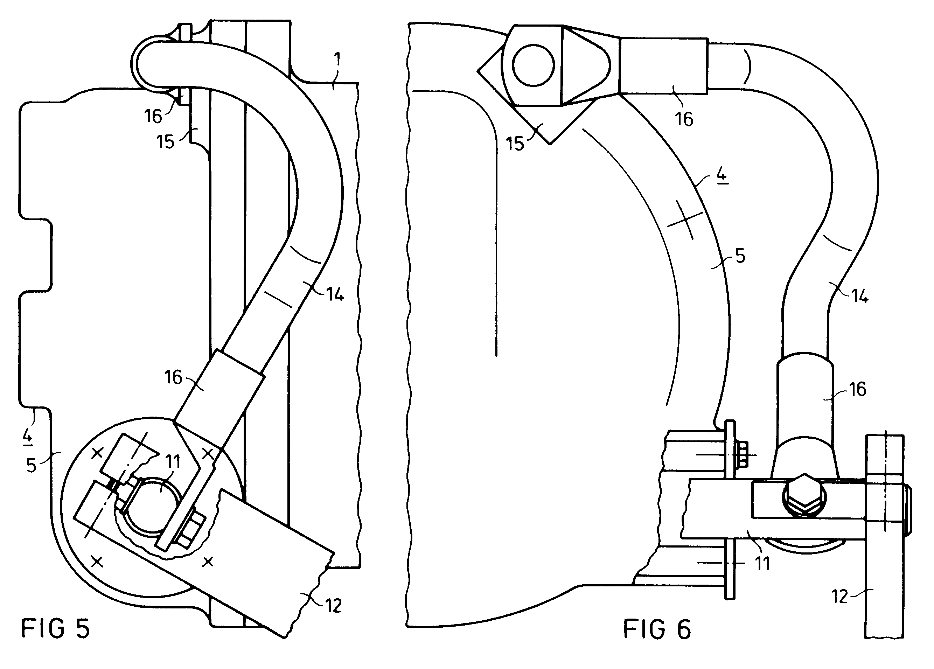

Die Antriebswelle 11 dient aber außerdem auch zur Übertragung des Erdpotentials. Zu diesem Zweck besteht sie aus elektrisch leitendem Material, wie z. B. Kupfer, Aluminium oder gegebenenfalls auch Stahl. Sie ist mit Hilfe einer Isolierbuchse 13 isoliert und abgedichtet in das Gehäuse 5 des Erdungsschalters 4 eingeführt. Diese Isolierbuchse 13 besteht aus Polytetrafluorethylen, was neben guten Gleiteigenschaften auch eine gute Spannungsfestigkeit aufweist. Das Erdpotential wird mit Hilfe eines aus einer Kupferlitze gebildeten flexiblen Strombandes 14 übertragen, das einerseits (siehe insbesondere die Figuren 5 und 6) über eine Brücke 15 mit dem Gehäuse 5 des Erdungsschalters 4 und andererseits mit der Antriebswelle 11 verbunden ist.

Das Stromband 14 ist dazu auf beiden Enden mit einem Kabelschuh 16 versehen, mit dem es an der Brücke 15 bzw. an der Antriebswelle 11 befestigt ist. Um die Befestigung des Kabelschuhs 16 des Srombandes 14 an der Antriebswelle 11 zu zeigen, ist in Figur 5 der davorliegende Antriebshebel 12 zum Teil ausgebrochen dargestellt.

Dieses Stromband 14, das sich somit auf der Außenseite des Gehäuses 5 des Erdungsschalters befindet, ist leicht zuganglich und kann gegebenenfalls auch ohne Schwierigkeiten gelöst werden, wenn die Verbindung zum Erdpotential unterbrochen werden soll, weil der Erdungsschalter 4 zu Meßzwecken verwendet werden soll. In diesem Fall ist der Erdungsschalter 4 aufgrund der isolierten Einführung der Antriebswelle 11 wie ein isolierter Erdungsschalter funktionsfähig.

## Patentansprüche

1. Erdungsschalter für eine druckgasisolierte, metallgekapselte Hochspannungsschaltanlage, deren Kapselung (1) ebenso wie das Gehäuse (5) des Erdungsschalters (4) auf Erdpotential liegt, bei dem das im Gehäuse (5) des Erdungsschalters (4) gasförmig oder durch Isolierstoff isolierte bewegliche Schaltstück (6) von einer rotierenden Antriebswelle (11) bewegt wird, die das Gehäuse (5) durchsetzt, und bei dem Kontaktelemente vorgesehen sind, welche das Erdpotential auf das bewegliche Schaltstück (6) übertragen, wobei die Verbindung (14) zum Erdpotential, insbesondere lösbar ausgebildet ist, **dadurch gekennzeichnet,** daß die aus elektrisch leitendem Material bestehende Antriebswelle (11) isoliert in das Gehäuse (5) eingeführt und außerhalb des Gehäuses (5) mit Mitteln (14) zur Übertragung des Erdpotentials verbunden ist und daß das bewegliche Schaltstück ein mit der Antriebswelle fest verbundenes Schaltmesser (7, 27, 37, 8, 28, 38) ist, dessen erstes Ende biegesteif ausgebildet und winkelsteif an die Antriebswelle (11) gekoppelt ist, und dessen zweites Ende elastisch ausgebildet ist.

2. Erdungsschalter nach Anspruch 1,
**dadurch gekennzeichnet,** daß das Schaltmesser aus einem steifen, an der Antriebswelle (11) befestigt Messerhalter (7, 27, 37) und einem elastischen Messerkontakt (8, 28, 38) besteht, der mit einem freien, elastisch auslenkbaren Bereich über den Messerhalter (7, 27, 37) hinausragt.

3. Erdungsschalter nach Anspruch 1,
**dadurch gekennzeichnet,** daß das Schaltmesser aus einem steifen, an der Antriebswelle (11) befestigten Messerhalter (7, 27, 37) und einem Messerkontakt (8, 28, 38) besteht, und daß
der Messerhalter an seinem dem Kontaktmesser zugewandten Ende wenigstens einen Bereich reduzierten Querschnittes aufweist.

4. Erdungsschalter nach einem der Ansprüche 1 bis 3,
**dadurch gekennzeichnet,** daß ein lösbar außen an dem Gehäuse (5) befestigtes Stromband (14) das Erdpotential auf die Antriebswelle (11) überträgt.

5. Erdungsschalter nach einem der Ansprüche 1 bis 4,
**dadurch gekennzeichnet,** daß die Isolierbuchse (13) für die Antriebswelle (11) aus Polytetrafluorethylen besteht.

6. Erdungsschalter nach einem der Ansprüche 1 bis 5,
**dadurch gekennzeichnet,** daß die Isolierbuchse (13) für die Antriebswelle (11) aus einem ausgehärteten Duroplast besteht.

## Claims

1. Earthing switch for a compressed gas-insulated, metal-clad high voltage switchgear, the casing (1) of this switchgear and the housing (5) of the earthing switch (4) being at earth potential, in which earthing switch the movable contact piece (6), which is gas-insulated or insulated by insulating material in the housing (5) of the earthing switch (4), is moved by a rotating drive shaft (11) which passes through the housing (5), and in which earthing switch there are provided contact elements which transmit earth potential to the movable contact piece (6), the connection (14) to earth potential being formed, in particular, in a detachable manner, characterised in that the drive shaft (11) consisting of electrically conductive material is inserted in the housing (5) in an insulated manner and is connected outside the housing (5) to means (14) for transmitting earth potential, and in that the movable contact piece is a contact blade (7, 27, 37, 8, 28, 38) firmly connected to the drive shaft, the first end of this contact blade being formed with resistance to bending and coupled rigidly at an angle to the drive shaft (11), and the second end of this contact blade being flexibly formed.

2. Earthing switch according to claim 1, characterised in that the contact blade comprises a rigid blade holder (7, 27, 37) secured to the drive shaft (11) and a flexible blade contact (8, 28, 38) which projects beyond the blade holder (7, 27, 37) in a free region of flexible excursion.

3. Earthing switch according to claim 1, characterised in that the contact blade comprises a rigid blade holder (7, 27, 37) secured to the drive shaft (11), and a blade contact (8, 28, 38), and in that the blade holder has at its end facing the contact blade at least a region having a reduced cross section.

4. Earthing switch according to one of claims 1 to 3, characterised in that a flexible connector (14) detachably secured to the outside of the housing (5) transmits earth potential to the drive shaft (11).

5. Earthing switch according to one of claims 1 to 4, characterised in that the insulating bushing (13) for the drive shaft (11) consists of polytetrafluoroethylene.

6. Earthing switch according to one of claims 1 to 5, characterised in that the insulating bushing (13) for the drive shaft (11) consists of a hardened thermosetting plastics material.

## Revendications

1. Interrupteur de mise à la terre destiné à une installation de commutation de courant haute tension isolée au moyen d'un gaz comprimé et sous blindage métallique, dont le blindage (1) ainsi que l'enveloppe (5) de l'interrupteur de mise à la terre (4) sont au potentiel de la terre, dans lequel la pièce de commutation (6) mobile, isolée dans l'enveloppe (5) de l'interrupteur de mise à la terre (4) au moyen d'un gaz ou d'une matière isolante, est déplacée à l'aide d'un arbre d'entraînement (11) rotatif qui traverse l'enveloppe (5) et dans laquelle sont prévus des éléments de contact qui transmettent le potentiel de la terre à la pièce de commutation mobile (6), la liaison (14) avec le potentiel de la terre étant notamment susceptible d'être interrompue, caractérisé en ce que l'arbre d' entraînement (11) en un matériau conducteur de l'électricité est introduit de façon isolée dans l'enveloppe (5) et est relié en dehors de l'enveloppe (5) à des moyens (14) destinés à transmettre le potentiel de la terre et en ce que la pièce de commutation mobile est une lame de commutation (7, 27, 37, 8, 28, 38) fixée rigidement à l'arbre d'entraînement, dont la première extrémité est rigide et est accouplée à l'arbre d'entraînement (11) sans possibilité de tourner angulairement, et dont la deuxième extrémité est élastique.

2. Interrupteur de mise à la terre selon la revendication 1, caractérisé en ce que la lame de commutation est constituée d'un support (7, 27, 37) de lame rigide fixé à l'arbre d'entraînement (11) et d'un contact (8, 28, 38) du type lame élastique qui dépasse du support (7, 27, 37) de lame dans un domaine libre où elle peut osciller élastiquement.

3. Interrupteur de mise à la terre selon la revendication 1, caractérisé en ce que la lame de commutation est constituée d'un support (7, 27, 37) de lame rigide fixé à l'arbre d'entraînement (11) et d'un contact (8, 28, 38) du type lame et en ce que le support de lame présente à son extrémité dirigée vers le contact du type lame une zone de section transversale réduite.

4. Interrupteur de mise à la terre selon l'une des revendications 1 à 3, caractérisé en ce qu'une bande conductrice (14) fixée extérieurement de façon détachable à l'enveloppe (5) transmet le potentiel de la terre à l'arbre d'entraînement (11).

5. Interrupteur de mise à la terre selon l'une des revendications 1 à 4, caractérisé en ce que le manchon isolant (13) destiné à l'arbre d'entraînement (11), est en polytétrafluoroéthyléne.

6. Interrupteur de mise à la terre selon l'une des revendications 1 à 5, caractérisé en ce que le manchon d'isolation (13) destiné à l'arbre d'entraînement (11) est en une matière thermodurcissable à l'état durci.
